# EUROPEAN PATENT SPECIFICATION

(11) **EP 4 528 561 B1**
(45) Date of publication and mention of the grant of the patent: **28.10.2026**
(21) Application number: 24201368.8
(22) Date of filing: 19.09.2024
(51) Int. Cl.: G06F 21/53, G06F 21/55, G06F 21/56

(54) **DETECTION AND REMEDIATION OF MALWARE IN VIRTUAL MACHINES USING SOFTWARE ENCLAVES**
ERKENNUNG UND SANIERUNG VON SCHADPROGRAMMEN IN VIRTUELLEN MASCHINEN MIT SOFTWARE-ENKLAVEN
DÉTECTION ET CORRECTION DE LOGICIEL MALVEILLANT DANS DES MACHINES VIRTUELLES À L'AIDE D'ENCLAVES DE LOGICIEL

(30) Priority: 20.09.2023 US 202318471108
(43) Date of publication of application: 26.03.2025
(73) Proprietor: VMware LLC, Palo Alto, CA 94304 (US)
(72) Inventor: Nanivadekar, Mandar, 411045 Pune (IN); Shinde, Sachin, 411045 Pune (IN)
(74) Representative: Dilg, Haeusler, Schindelmann Patentanwaltsgesellschaft mbH

(56) References cited:
- EP-A1- 2 975 548
- US-A1- 2017 235 951
- PATIL RAJENDRA ET AL: "Designing in-VM-assisted lightweight agent-based malware detection framework for securing virtual machines in cloud computing", INTERNATIONAL JOURNAL OF INFORMATION SECURITY (IJIS), SPRINGER, HEIDELBERG, DE, vol. 19, no. 2, 26 June 2019 (2019-06-26), pages 147 - 162, XP037063527, ISSN: 1615-5262, [retrieved on 20190626], DOI: 10.1007/S10207-019-00447-W

## Description

### Background

Unless otherwise indicated, the subject matter described in this section should not be construed as prior art to the claims of the present application and is not admitted as being prior art by inclusion in this section.

An endpoint detection and response (EDR) system is a security solution that protects an organization's computing endpoints-which can include both physical machines (e.g., personal computers, mobile devices, etc.) and virtual machines (VMs)-from malware and other cyber threats. A typical EDR system is composed of a client-side component, referred to as a security agent, that resides on each endpoint and a server-side component, referred to as an EDR manager, that resides on one or more centrally-managed servers. The security agent collects data regarding software processes running on the endpoint and transmits this data to the EDR manager. The EDR manager analyzes the received endpoint data to detect and respond to threats that are revealed by the analysis.

In the scenario where an endpoint is a VM, the security agent conventionally runs as a guest process within the VM. However, in recent years, sophisticated malware has emerged that can run at the same elevated privilege level as a VM's guest operating system (OS) kernel. Such malware can potentially bypass or disable the in-guest security agent using its elevated privileges, thereby breaking the protection offered by the EDR system.

PATIL RAJENDRA ET AL: "Designing in-VM-assisted lightweight agent-based malware detection framework for securing virtual machines in cloud computing",INTERNATIONAL JOURNAL OF INFORMATION SECURITY (IJIS), SPRINGER, HEIDELBERG, DE, vol. 19, no. 2, 26 June 2019 (2019-06-26), pages 147-162, describes a framework for securing virtual machines in cloud computing through an in-VM-assisted lightweight agent-based malware detection system. It uses a two-layer approach with agents at the VM level and anomaly detection at the hypervisor level.

EP 2 975 548 discloses a centralized security model to enhance efficiency and effectiveness.

### Brief Description of the Drawings

FIG. 1 depicts an environment that implements a conventional EDR system.
FIG. 2 depicts an environment that implements an enhanced EDR system according to certain embodiments.
FIG. 3 depicts a flowchart for creating a software enclave for a VM and initializing an enclave security agent within the software enclave according to certain embodiments.
FIG. 4 depicts a flowchart for detecting and remediate malware in the VM using the enclave security agent according to certain embodiments.

### Detailed Description

In the following description, for purposes of explanation, numerous examples and details are set forth in order to provide an understanding of various embodiments. It will be evident, however, to one skilled in the art that certain embodiments can be practiced without some of these details or can be practiced with modifications or equivalents thereof.

### 1. Overview

Embodiments of the present disclosure are directed to techniques for detecting and remediating malware in VMs using software enclaves. As used herein, "malware" is any type of software that is designed to harm (e.g., disrupt, damage, gain unauthorized access to, exploit, etc.) computer systems and/or their users. Examples of malware include ransomware, spyware, viruses, and trojans. A "software enclave" is a hypervisor-created execution environment that is associated with a VM and can run program code (known as enclave code) which has visibility into and control over the VM, but is completely isolated from guest processes running within the VM. As a result, the enclave code cannot be tampered with by guest-level malware. One known software enclave technology is the Guest Monitoring Mode (GMM) feature of VMware's ESXi hypervisor.

At a high level, the techniques of the present disclosure involve leveraging the concept of software enclaves to deploy and run an EDR security agent for a VM within the VM's associated software enclave (referred to as an enclave security agent), rather than within the VM itself. The enclave security agent can then cooperate with a central EDR manager, as well as with a minimal in-guest helper agent, to detect and remediate malware in the VM. Because the enclave security agent is isolated from and thus inaccessible by potentially malicious guest processes, this solution is significantly more secure than current EDR systems.

### 2. Example Environment and Solution Architecture

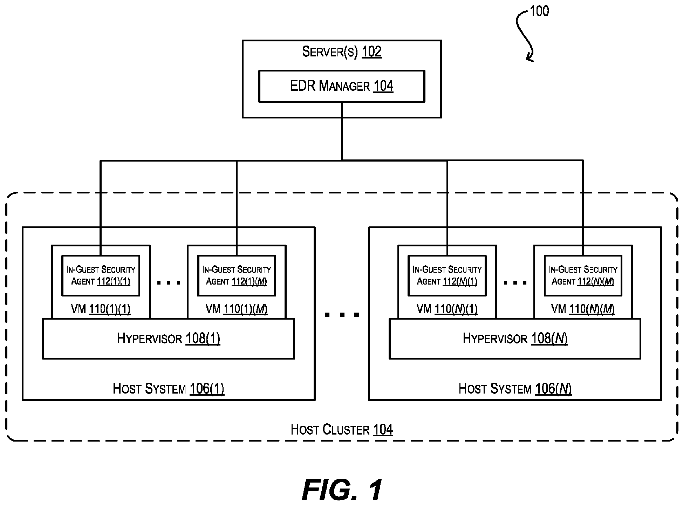

To provide context for the embodiments discussed herein, FIG. 1 is a simplified block diagram of an example environment 100 that implements a conventional EDR system. As shown, environment 100 includes one or more servers 102 that execute an EDR manager 104 and a host cluster 104 comprising a plurality of host systems 106(1)-(N). Server(s) 102 and host cluster 104 may reside in the same or different cloud environments. For example, server(s) 102 may reside in a public cloud and host cluster 104 may reside in a private cloud of an organization (e.g., an on-premises data center of that organization). As another example, server(s) 102 may reside in one public cloud and host cluster 104 may reside in another public cloud. As yet another example, server(s) 102 and host cluster 104 may reside in the same public or private cloud.

Each host system 106(i) (for i = 1 ... *N*) includes a hypervisor 108(i) and a plurality of VMs 110(i)(1)-(i)(M) that are computing endpoints managed by the EDR system. Accordingly, each VM(i)(j) (for i = 1 *... N* and j = 1 ... M) includes an in-guest security agent 112*(i)(j)* of the EDR system that communicates with EDR manager 104. Generally speaking, these in-guest security agents collect data pertaining to the guest processes running within their corresponding VMs and send that data to EDR manager 104. In response, EDR manager 104 aggregates and analyzes the received data using, e.g., machine learning and/or other techniques in order to identify and respond to potential threats such as malware attacks, network intrusions, and so on.

As noted in the Background section, one problem with the conventional EDR system shown in FIG. 1 is that new and emerging malware is capable of running at elevated privilege levels within a VM. This means that such sophisticated malware can use kernel-level privileges to disrupt, bypass, or disable the operation of the VM's in-guest security agent, thereby rendering the EDR system ineffective.

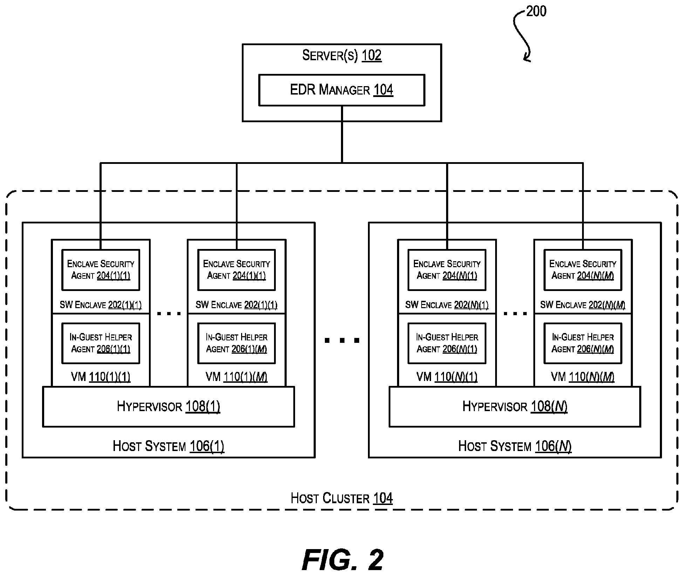

To address this and other related issues, FIG. 2 depicts an environment 200 with an enhanced EDR system according to embodiments of the present disclosure that includes the following new components: (A) a software enclave 202(*i*)(*j*) associated with each VM *110(i)(j),* (B) an enclave security agent *204(i)(j)* running within each software enclave *202(i)(j)* that communicates with EDR manager 104, and (C) an in-guest helper agent *206(i)(j)* running within each VM 110(*i*)(*j*)*.* As mentioned previously, a software enclave is a hypervisor-created execution environment that is tied to a VM and allows enclave code running therein (such as the enclave security agent) full access/control over the VM. For example, the enclave code can read and write the VM's guest memory, suspend and resume the VM's virtual central processing units (CPUs), and so on. However, the software enclave is completely isolated from the VM's guest processes, and thus the enclave code cannot be compromised by malicious code within the VM.

In various embodiments, the enhanced EDR system shown in FIG. 2 can enable the following novel workflow for detecting and remediating malware in each VM 110(i)(j) of host cluster 104. This workflow can be executed during the runtime of the VM.
1. The in-guest helper agent of the VM reverse-engineers the guest physical addresses (GPAs) of "important" guest OS system calls (i.e., system calls typically triggered by malware) and provides a list of the system calls and their corresponding GPAs to the VM's enclave security agent; this can be performed a single time, when the VM starts
2. The enclave security agent registers the GPAs received from the in-guest helper agent with the hypervisor running the VM, thereby causing the hypervisor to transmit a real-time notification to the enclave security agent whenever any of the GPAs are accessed by a guest process of the VM
3. Upon receiving a notification from the hypervisor that a particular registered GPA has been accessed, the enclave security agent identifies the system call corresponding to that GPA, generates a sequence of events (referred to as an event chain) that includes the identified system call and potentially other system calls or events within the VM that preceded the current system call, and attempts to match the generated event chain with known "bad" event chains (i.e., event chains indicative of known malware) maintained within a rule database of the agent
4. If a match is made, the enclave security agent generates an alert that includes the generated event chain, the matched "bad" event chain, and other relevant information (e.g., a timestamp, an identifier (ID) of the guest process that triggered the system calls/events in the event chain, etc.), and sends the alert to EDR manager 104; in some embodiments, the enclave security agent may also automatically trigger one or more remedial actions, such as suspending or terminating the VM

With the architecture and approach described above, a number of advantages are achieved. First, because the enclave security agent for each VM runs within a software enclave associated with that VM rather than within the VM itself, it is completely isolated from guest processes and thus cannot be compromised by malware in the VM. In certain embodiments (discussed in section (3) below), the software enclave may be configured with one or more "enclave timers" that ensure the enclave security agent runs at scheduled intervals (e.g., once every second).

Second, because of the greater security offered by this solution, the enclave security agent can take on responsibilities that were previously performed by EDR manager 104. For example, in the workflow above, the enclave security agent performs event chain matching against a rule database and triggers alerts/remedial actions, which are generally not performed by conventional in-guest security agents. In alternative embodiments, enclave security agent may simply send the system calls/events that it collects to EDR manager 104 and leave the malware detection and remediation functions to the manager.

The remainder of the present disclosure provides additional details regarding the implementation of components 202-206 and the foregoing high-level workflow. It should be appreciated FIGS. 1 and 2 are illustrative and not intended to limit embodiments of the present disclosure. For example, although these figures depict a particular arrangement of components in environments 100 and 200, other arrangements are possible (e.g., the functionality attributed to a particular component may be split into multiple components, components may be combined, etc.).

Further, environments 100 and 200 may include additional components or functions that are not specifically described. For example, in certain embodiments environment 200 of FIG. 2 may include a proxy component within each host system 106(i) that serves as a communication interface between the enclave security agents of that host system and EDR manager 104. One of ordinary skill in the art will recognize other variations, modifications, and alternatives.

### 3. Enclave Creation and Initialization of Enclave Security Agent

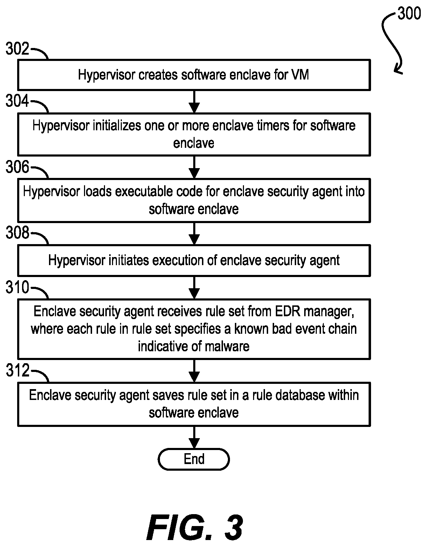

FIG. 3 depicts a flowchart 300 that may be performed with respect to each VM *110(i)(j)* (for *i* = 1 ... *N* and *j* = 1 ... *M)* of FIG. 2 for creating the VM's associated software enclave 202(i)(j) and initializing its enclave security agent 204(*i*)(*j*) according to certain embodiments. Flowchart 300 may be performed prior to or concurrently with the process of powering on VM(i)(j). It should be noted that while this flowchart depicts a particular sequence of steps, certain steps may be combined, performed in parallel, split into multiple sub-steps, rearranged in order, and so on.

Starting with steps 302 and 304, hypervisor 108(i) running VM(*i*)(*j*) can create software enclave *202(i)(j)* in accordance with the hypervisor's software enclave technology and can initialize one or more enclave timers for the created enclave, where the enclave timer(s) indicate the interval at which enclave code within the enclave (i.e., enclave security agent 204(i)(j)) will run. As mentioned previously, this timer mechanism ensures that the enclave code will run at scheduled intervals and thus be able to carry out its intended duties. In a particular embodiment, each enclave timer may be associated with a virtual CPU of VM 110(*i*)(*j*) such that: (A) when the timer expires, control of the virtual CPU is passed from VM 110(*i*)(*j*) to software enclave 202(i)(j), (B) enclave security agent 204(*i*)(*j*) runs on the virtual CPU for a predetermined time slice, and (C) upon completion of the time slice, the enclave timer is reset and control is returned to VM *110(i)(j).*

At steps 306 and 308, hypervisor 108(i) can load the executable code for enclave security agent 204(*i*)(*j*) into software enclave 202(*i*)(*j*) and can initiate execution of the agent. Hypervisor 108(*i*) may receive this executable code from EDR manager 104 or from some other trusted source.

Upon initiation, enclave security agent 204(*i*)(*j*) can receive a rule set from EDR manager 104 for performing malware detection (step 310). Each rule in this rule set can specify an event chain corresponding to a sequence of system call invocations and/or other events that are indicative of the behavior of a particular strain or type of malware. For example, ransomware typically carries out a series of actions that include downloading the ransomware payload from a command- and-control server, disabling deployed security solutions, identifying and terminating important system processes, deleting in-guest snapshots, tampering with the OS registry, and finding and encrypting user data. Accordingly, a rule directed to ransomware in general or to a ransomware strain may specify an event chain with system call invocations/events that correspond to these specific actions.

Finally, at step 312, enclave security agent 204(*i*)(*j*) can save the received rules in a local rule database within software enclave 202(*i*)(*j*) and the flowchart can end.

### 4. Malware Detection and Remediation

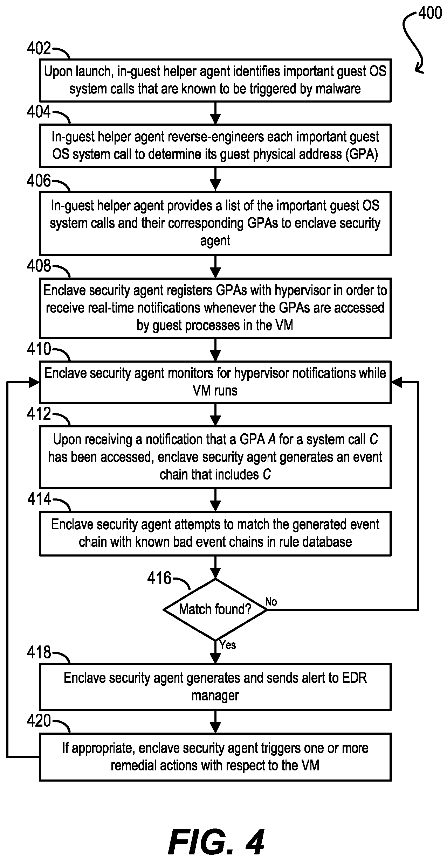

FIG. 4 depicts a flowchart 400 that may be performed with respect to each VM 110(*i*)(*j*) (for *i* = 1 *... N* and *j* = 1 ... *M*) of FIG. 2 for detecting and remediating malware within the VM according to certain embodiments. Flowchart 400 assumes that the VM's associated software enclave 202(*i*)(*j*) has been created and the enclave's enclave-level security agent 204(*i*)(*j*) has been initialized per flowchart 300 of FIG. 3. Flowchart 400 also assumes that in-guest helper agent 206(*i*)(*j*) has been launched within the VM. Like flowchart 300, while this flowchart depicts a particular sequence of steps, certain steps may be combined, performed in parallel, split into multiple sub-steps, rearranged in order, and so on.

Starting with steps 402 and 404, upon being launched, in-guest helper agent 206(*i*)(*j*) can identify important guest OS system calls that are known to be triggered by malware and can reverse-engineer each of these system calls to determine its guest physical address (GPA) within VM 110(*i*)(*j*), or in other words the location where the executable code for the system call resides in guest physical memory. Examples of such important system calls include calls pertaining to process control (e.g., creating a process, forking a process, terminating a process, obtaining a process list, etc.), calls pertaining to filesystem management (e.g., reading a file, writing a file, deleting a file, etc.), calls pertaining to memory management (e.g., allocating a range of memory, deallocating a range of memory, etc.), and calls pertaining to network communication (e.g., reading from a network socket, writing to a network socket, etc.).

Alternatively, rather performing this reverse-engineering up front at the time of launch, in-guest helper agent 206(*i*)(*j*) can reverse-engineer each important system call at the time it is first invoked within VM 110*(i)(j).* In either case, upon determining GPAs for all of the important system calls, in-guest helper agent 206(*i*)(*j*) can provide a list of those system calls and their corresponding GPAs to enclave-level security agent *204(i)(j)* (step 406).

At step 408, enclave security agent 204(*i*)(*j*) can receive the list of system calls/GPAs and register the GPAs with hypervisor 108(*i*) in order to receive a real-time notification from the hypervisor whenever one of the GPAs is accessed (e.g., read or written) by a guest process of VM 110(*i*)(*j*). In one set of embodiments, this step can involve registering a callback with hypervisor 108(*i*) on each GPA via a tracing mechanism. In another set of embodiments, the registration step can involve asking hypervisor 108(*i*) to set a memory access breakpoint on each GPA.

Enclave security agent 204(*i*)(*j*) can then monitor for these hypervisor notifications while VM 110(*i*)(*j*) runs (step 410). Upon receiving a notification that a guest physical address *A* corresponding to a system call *C* has been accessed within VM 110(*i*)(*j*), enclave security agent 204(*i*)(*j*) can generate an event chain that includes *C*, as well as potentially other system calls or events that were detected prior to *C* in the VM (step 412), and can attempt to match the generated event chain to the known "bad" event chains included in the rule set maintained in its local rule database (step 414). This matching process can involve identifying an exact match (such that the generated event chain and a matched event chain must be exactly the same) or a partial match (such that the generated and matched event chains must share some threshold percentage or number of common events, but do not need to be identical). The specific match criteria employed at step 414 may depend on various factors, such as whether the guest process that triggered the events in the generated event chain is a known good process, the timing of the events in the generated event chain, and so on.

If no match is found at step 416, enclave security agent 204(*i*)(*j*) can return to step 410 in order to continue its monitoring. However, if a match is found at step 416, enclave security agent 204(*i*)(*j*) can generate and send an alert to EDR manager 104 (step 418). This alert can include the generated event chain, the matched bad event chain, the process ID of the guest process that triggered the events, timestamps for the events, and other diagnostic information (e.g., a memory dump of the VM, process list, etc.). In response, EDR manager 104 can take one or more actions in accordance with its design and configuration (e.g., notify an administrator, perform further threat analysis, etc.).

In addition to (or in lieu of) generating and sending the alert to EDR manager 104, enclave security agent *204(i)(j)* can automatically trigger one or more remedial actions with respect to VM 110(*i*)(*j*) (step 420). For example, enclave security agent 204(*i*)(*j*) may suspend the *VM110(i)(j)* (or specific virtual CPUs of the VM) so that the malware attack indicated by the match cannot progress. As another example, enclave security agent 204(*i*)(*j*) can terminate one or more guest process(es) within VM110(*i*)(*j*) that are determined to be a threat, or the VM as a whole. The specific remedial action(s) triggered at step 420 (or whether any remedial action is triggered at all) may depend on criteria such as how close the match is, the severity of the threat posed by the malware associated with the match, etc.

Finally, assuming enclave security agent 204(*i*)(*j*) does not suspend or stop VM 110(*i*)(*j*) at step 420, the agent can return to step 410 in order to monitor for further notifications from hypervisor 108(*i*). This loop can repeat until the VM is powered-off or otherwise terminated.

Certain embodiments described herein can employ various computer-implemented operations involving data stored in computer systems. For example, these operations can require physical manipulation of physical quantities-usually, though not necessarily, these quantities take the form of electrical or magnetic signals, where they (or representations of them) are capable of being stored, transferred, combined, compared, or otherwise manipulated. Such manipulations are often referred to in terms such as producing, identifying, determining, comparing, etc. Any operations described herein that form part of one or more embodiments can be useful machine operations.

Further, one or more embodiments can relate to a device or an apparatus for performing the foregoing operations. The apparatus can be specially constructed for specific required purposes, or it can be a generic computer system comprising one or more general purpose processors (e.g., Intel or AMD x86 processors) selectively activated or configured by program code stored in the computer system. In particular, various generic computer systems may be used with computer programs written in accordance with the teachings herein, or it may be more convenient to construct a more specialized apparatus to perform the required operations. The various embodiments described herein can be practiced with other computer system configurations including handheld devices, microprocessor systems, microprocessor-based or programmable consumer electronics, minicomputers, mainframe computers, and the like.

Yet further, one or more embodiments can be implemented as one or more computer programs or as one or more computer program modules embodied in one or more non-transitory computer readable storage media. The term non-transitory computer readable storage medium refers to any storage device, based on any existing or subsequently developed technology, that can store data and/or computer programs in a non-transitory state for access by a computer system. Examples of non-transitory computer readable media include a hard drive, network attached storage (NAS), read-only memory, random-access memory, flash-based nonvolatile memory (e.g., a flash memory card or a solid state disk), persistent memory, NVMe device, a CD (Compact Disc) (e.g., CD-ROM, CD-R, CD-RW, etc.), a DVD (Digital Versatile Disc), a magnetic tape, and other optical and non-optical data storage devices. The non-transitory computer readable media can also be distributed over a network coupled computer system so that the computer readable code is stored and executed in a distributed fashion.

In addition, while certain virtualization methods referenced herein have generally assumed that virtual machines present interfaces consistent with a particular hardware system, persons of ordinary skill in the art will recognize that the methods referenced can be used in conjunction with virtualizations that do not correspond directly to any particular hardware system. Virtualization systems in accordance with the various embodiments, implemented as hosted embodiments, non-hosted embodiments or as embodiments that tend to blur distinctions between the two, are all envisioned. Furthermore, certain virtualization operations can be wholly or partially implemented in hardware.

Many variations, modifications, additions, and improvements are possible, regardless the degree of virtualization. The virtualization software can therefore include components of a host, console, or guest operating system that performs virtualization functions. Plural instances can be provided for components, operations, or structures described herein as a single instance. Finally, boundaries between various components, operations, and data stores are somewhat arbitrary, and particular operations are illustrated in the context of specific illustrative configurations. Other allocations of functionality are envisioned and may fall within the scope of the present disclosure. In general, structures and functionality presented as separate components in exemplary configurations can be implemented as a combined structure or component. Similarly, structures and functionality presented as a single component can be implemented as separate components.

As used in the description herein and throughout the claims that follow, "a," "an," and "the" includes plural references unless the context clearly dictates otherwise. Also, as used in the description herein and throughout the claims that follow, the meaning of "in" includes "in" and "on" unless the context clearly dictates otherwise.

The above description illustrates various embodiments along with examples of how aspects of particular embodiments may be implemented. These examples and embodiments should not be deemed to be the only embodiments and are presented to illustrate the flexibility and advantages of particular embodiments as defined by the following claims. Other arrangements, embodiments and implementations can be employed without departing from the scope hereof as defined by the claims.

## Claims

1. A method (300) comprising:
creating (302), by a hypervisor (108), a software enclave (202) for a virtual machine, VM (110), the software enclave (202) being a secure execution environment for running program code that has visibility into the VM (110) but is isolated from guest processes of the VM (110);
loading (306), by the hypervisor (108), an enclave security agent (204) into the software enclave (202), the enclave security agent (204) being a component of an endpoint detection and response, EDR, system that is configured to collect information regarding events occurring within the VM (110) and to detect malware in the VM (110) based on the information; and
initiating (308), by the hypervisor (108), execution of the enclave security agent (204) within the software enclave (202).

2. The method (300) of claim 1, wherein the enclave security agent (204) is further configured to trigger one or more actions for remediating detected malware in the VM (110).

3. The method (300) of claim 2, wherein the one or more actions include suspending one or more virtual central processing units, CPUs, of the VM (110) or terminating one or more guest processes of the VM (110).

4. The method (300) of any one of the claims 1 to 3, wherein upon being initiated, the enclave security agent (204):
receives (310) a rule set comprising a plurality of rules from a server-side component (104) of the EDR system, each rule including a known bad event chain indicative of a type or strain of malware; and
saves (312) the rule set within the software enclave (202).

5. The method (300; 400) of any one of the claims 1 to 4, wherein upon being initiated, the enclave security agent (204):
receives (406), from a helper agent (206) running in the VM (110), a plurality of system calls and, for each system call, a guest physical address, GPA, of the VM (110) where executable code for said each system call resides; and
registers (408) the GPAs for the plurality of system calls with the hypervisor (108) in order to receive notifications from the hypervisor (108) whenever the GPAs are accessed within the VM (110).

6. The method (300; 400) of claim 5, wherein the enclave security agent (204) further:
monitors (410) for the notifications while the VM (110) runs; and
upon receiving a notification that a GPA for a system call has been accessed, generates (412) an event chain that includes the system call.

7. The method (300; 400) of claim 6, wherein the enclave security agent (204) further:
attempts (414) to match the event chain with one or more known bad event chains; and
in response to finding a match, generates (418) and sends an alert to a server-side component (104) of the EDR system.

8. A non-transitory computer readable storage medium having stored thereon program code executable by a hypervisor (108) of a computer system, the program code causing the hypervisor (108) to execute a method (300) as set forth in any one of the preceding method claims.

9. A computer system comprising:
a processor;
a hypervisor (108); and
a non-transitory computer readable medium having stored thereon program code that, when executed by the processor, causes the hypervisor (108) to:
create a software enclave (202) for a virtual machine, VM (110), the software enclave (202) being a secure execution environment for running program code that has visibility into the VM (110) but is isolated from guest processes of the VM (110);
load an enclave security agent (204) into the software enclave (202), the enclave security agent (204) being a component of an endpoint detection and response, EDR, system that is configured to collect information regarding events occurring within the VM (110) and to detect malware in the VM (110) based on the information; and
initiate execution of the enclave security agent (204) within the software enclave (202).

10. The computer system of claim 9, wherein the enclave security agent (204) is further configured to trigger one or more actions for remediating detected malware in the VM (110).

11. The computer system of claim 10, wherein the one or more actions include suspending one or more virtual central processing units, CPUs, of the VM (110) or terminating one or more guest processes of the VM (110).

12. The computer system of any one of the claims 9 to 11, wherein upon being initiated, the enclave security agent (204):
receives a rule set comprising a plurality of rules from a server-side component (104) of the EDR system, each rule including a known bad event chain indicative of a type or strain of malware; and
saves the rule set within the software enclave (202).

13. The computer system of any one of the claims 9 to 12, wherein upon being initiated, the enclave security agent (204):
receives, from a helper agent (206) running in the VM (110), a plurality of system calls and, for each system call, a guest physical address, GPA, of the VM (110) where executable code for said each system call resides; and
registers the GPAs for the plurality of system calls with the hypervisor (108) in order to receive notifications from the hypervisor (108) whenever the GPAs are accessed within the VM (110).

14. The computer system of claim 13, wherein the enclave security agent (204) further:
monitors for the notifications while the VM (110) runs; and
upon receiving a notification that a GPA for a system call has been accessed, generates an event chain that includes the system call.

15. The computer system of claim 14, wherein the enclave security agent (204) further:
attempts to match the event chain with one or more known bad event chains; and
in response to finding a match, generates and sends an alert to a server-side component (104) of the EDR system.

## Patentansprüche

1. Ein Verfahren (300), aufweisend:
Erzeugen (302), durch einen Hypervisor (108), einer Software-Enklave (202) für eine virtuelle Maschine, VM (110), wobei die Software-Enklave (202) eine sichere Ausführungsumgebung zum Ausführen von Programmcode ist, der Einsicht in die VM (110) hat, aber von Gastprozessen der VM (110) isoliert ist;
Laden (306), durch den Hypervisor (108), eines Enklavensicherheitsagenten (204) in die Software-Enklave (202), wobei der Enklavensicherheitsagent (204) eine Komponente eines Endpunktdetektions- und Antwortsystems, EDR-Systems, ist, das konfiguriert ist, um Informationen bezüglich Ereignissen zu sammeln, die innerhalb der VM (110) auftreten, und um Malware in der VM (110) basierend auf den Informationen zu detektieren; und
Initiieren (308), durch den Hypervisor (108), der Ausführung des Enklavensicherheitsagenten (204) innerhalb der Software-Enklave (202).

2. Das Verfahren (300) gemäß Anspruch 1, wobei der Enklavensicherheitsagent (204) ferner konfiguriert ist, um eine oder mehrere Aktionen zum Beheben von detektierter Malware in der VM (110) auszulösen.

3. Das Verfahren (300) gemäß Anspruch 2, wobei die eine oder mehreren Aktionen ein Aussetzen einer oder mehrerer virtueller zentraler Verarbeitungseinheiten, CPUs, der VM (110) oder ein Beenden eines oder mehrerer Gastprozesse der VM (110) beinhalten.

4. Das Verfahren (300) gemäß einem der Ansprüche 1 bis 3, wobei der Enklavensicherheitsagent (204), auf ein Initiieren hin:
einen Regelsatz empfängt (310), der eine Mehrzahl von Regeln von einer serverseitigen Komponente (104) des EDR-Systems aufweist, wobei jede Regel eine bekannte schlechte Ereigniskette beinhaltet, die einen Typ oder eine Belastung von Malware anzeigt; und
den Regelsatz innerhalb der Software-Enklave (202) speichert (312).

5. Das Verfahren (300; 400) gemäß einem der Ansprüche 1 bis 4, wobei der Enklavensicherheitsagent (204), auf ein Initiieren hin:
von einem Helferagenten (206), der in der VM (110) läuft, eine Mehrzahl von Systemaufrufen und für jeden Systemaufruf eine physische Gastadresse, GPA, der VM (110) empfängt (406), wo sich ausführbarer Code für jeden Systemaufruf befindet; und
die GPAs für die Mehrzahl von Systemaufrufen bei dem Hypervisor (108) registriert (408), um Benachrichtigungen von dem Hypervisor (108) zu empfangen, wann immer auf die GPAs innerhalb der VM (110) zugegriffen wird.

6. Das Verfahren (300; 400) gemäß Anspruch 5, wobei der Enklavensicherheitsagent (204) ferner:
die Benachrichtigungen überwacht (410), während die VM (110) läuft; und
auf den Empfang einer Benachrichtigung hin, dass auf eine GPA für einen Systemaufruf zugegriffen wurde, eine Ereigniskette erzeugt (412), die den Systemaufruf beinhaltet.

7. Das Verfahren (300; 400) gemäß Anspruch 6, wobei der Enklavensicherheitsagent (204) ferner:
versucht (414), die Ereigniskette mit einer oder mehreren bekannten schlechten Ereignisketten abzugleichen; und
als Reaktion auf das Finden einer Übereinstimmung eine Warnung erzeugt (418) und an eine serverseitige Komponente (104) des EDR-Systems sendet.

8. Ein nicht-transitorisches computerlesbares Speichermedium, auf dem Programmcode gespeichert ist, der durch einen Hypervisor (108) eines Computersystems ausführbar ist, wobei der Programmcode den Hypervisor (108) veranlasst, ein Verfahren (300) gemäß einem der vorhergehenden Verfahrensansprüche auszuführen.

9. Ein Computersystem, aufweisend:
einen Prozessor;
einen Hypervisor (108); und
ein nicht-transitorisches computerlesbares Medium, auf dem Programmcode gespeichert ist, der, wenn er durch den Prozessor ausgeführt wird, den Hypervisor (108) veranlasst zum:
Erzeugen einer Software-Enklave (202) für eine virtuelle Maschine, VM (110), wobei die Software-Enklave (202) eine sichere Ausführungsumgebung zum Ausführen von Programmcode ist, der Einsicht in die VM (110) hat, aber von Gastprozessen der VM (110) isoliert ist;
Laden eines Enklavensicherheitsagenten (204) in die Software-Enklave (202), wobei der Enklavensicherheitsagent (204) eine Komponente eines Endpunktdetektions- und Antwortsystems, EDR-Systems, ist, das konfiguriert ist, um Informationen bezüglich Ereignissen zu sammeln, die innerhalb der VM (110) auftreten, und um Malware in der VM (110) basierend auf den Informationen zu detektieren; und
Initiieren der Ausführung des Enklavensicherheitsagenten (204) innerhalb der Software-Enklave (202).

10. Das Computersystem gemäß Anspruch 9, wobei der Enklavensicherheitsagent (204) ferner konfiguriert ist, um eine oder mehrere Aktionen zum Beheben von detektierter Malware in der VM (110) auszulösen.

11. Das Computersystem gemäß Anspruch 10, wobei die eine oder mehreren Aktionen ein Aussetzen einer oder mehrerer virtueller zentraler Verarbeitungseinheiten, CPUs, der VM (110) oder ein Beenden eines oder mehrerer Gastprozesse der VM (110) beinhalten.

12. Das Computersystem gemäß einem der Ansprüche 9 bis 11, wobei der Enklavensicherheitsagent (204), auf ein Initiieren hin:
einen Regelsatz empfängt, der eine Mehrzahl von Regeln von einer serverseitigen Komponente (104) des EDR-Systems aufweist, wobei jede Regel eine bekannte schlechte Ereigniskette beinhaltet, die einen Typ oder eine Belastung von Malware anzeigt; und
den Regelsatz innerhalb der Software-Enklave (202) speichert.

13. Das Computersystem gemäß einem der Ansprüche 9 bis 12, wobei der Enklavensicherheitsagent (204), auf ein Initiieren hin:
von einem Helferagenten (206), der in der VM (110) läuft, eine Mehrzahl von Systemaufrufen und für jeden Systemaufruf eine physische Gastadresse, GPA, der VM (110) empfängt, wo sich ausführbarer Code für jeden Systemaufruf befindet; und
die GPAs für die Mehrzahl von Systemaufrufen bei dem Hypervisor (108) registriert, um Benachrichtigungen von dem Hypervisor (108) zu empfangen, wann immer auf die GPAs innerhalb der VM (110) zugegriffen wird.

14. Das Computersystem gemäß Anspruch 13, wobei der Enklavensicherheitsagent (204) ferner:
die Benachrichtigungen überwacht, während die VM (110) läuft; und
auf den Empfang einer Benachrichtigung hin, dass auf eine GPA für einen Systemaufruf zugegriffen wurde, eine Ereigniskette erzeugt, die den Systemaufruf beinhaltet.

15. Das Computersystem gemäß Anspruch 14, wobei der Enklavensicherheitsagent (204) ferner:
versucht, die Ereigniskette mit einer oder mehreren bekannten schlechten Ereignisketten abzugleichen; und
als Reaktion auf das Finden einer Übereinstimmung eine Warnung erzeugt und an eine serverseitige Komponente (104) des EDR-Systems sendet.

## Revendications

1. Procédé (300), comprenant les étapes consistant à :
créer (302), par l'intermédiaire d'un hyperviseur (108), une enclave logicielle (202) pour une machine virtuelle, VM, (110), l'enclave logicielle (202) étant un environnement d'exécution sécurisé pour exécuter un code de programme qui présente une visibilité dans la VM (110) mais est isolé de processus invités de la VM (110) ;
charger (306), par l'intermédiaire de l'hyperviseur (108), un agent de sécurité d'enclave (204) dans l'enclave logicielle (202), l'agent de sécurité d'enclave (204) étant un composant d'un système de détection et de réponse de point d'extrémité, EDR, qui est configuré pour collecter des informations concernant des événements survenant dans la VM (110) et pour détecter des logiciels malveillants dans la VM (110) sur la base des informations ; et
initier (308), par l'intermédiaire de l'hyperviseur (108), une exécution de l'agent de sécurité d'enclave (204) à l'intérieur de l'enclave logicielle (202).

2. Procédé (300) selon la revendication 1, dans lequel l'agent de sécurité d'enclave (204) est en outre configuré pour déclencher une ou plusieurs actions pour remédier aux logiciels malveillants détectés dans la VM (110).

3. Procédé (300) selon la revendication 2, dans lequel les une ou plusieurs actions incluent une suspension d'une ou plusieurs unités centrales de traitement virtuelles, CPU, de la VM (110) ou un achèvement d'un ou plusieurs processus invités de la VM (110).

4. Procédé (300) selon l'une quelconque des revendications 1 à 3, dans lequel lorsqu'il est initié, l'agent de sécurité d'enclave (204) :
reçoit (310) un ensemble de règles comprenant une pluralité de règles provenant d'un composant côté serveur (104) du système EDR, chaque règle incluant une chaîne d'événements mauvais connue indiquant un type ou une souche de logiciel malveillant ; et
enregistre (312) l'ensemble de règles dans l'enclave logicielle (202).

5. Procédé (300 ; 400) selon l'une quelconque des revendications 1 à 4, dans lequel lorsqu'il est initié, l'agent de sécurité enclave (204) :
reçoit (406), à partir d'un agent d'assistance (206) s'exécutant dans la VM (110), une pluralité d'appels de système et, pour chaque appel de système, une adresse physique d'invité, GPA, de la VM (110) où réside le code exécutable pour ledit chaque appel de système ; et
enregistre (408) les GPA pour la pluralité d'appels de système avec l'hyperviseur (108) afin de recevoir des notifications en provenance de l'hyperviseur (108) à chaque accès aux GPA dans la VM (110).

6. Procédé (300 ; 400) selon la revendication 5, dans lequel l'agent de sécurité d'enclave (204) en outre :
surveille (410) les notifications pendant que la VM (110) tourne ; et
lors de la réception d'une notification indiquant un accès à une GPA pour un appel de système , génère (412) une chaîne d'événements qui inclut l'appel de système.

7. Procédé (300 ; 400) selon la revendication 6, dans lequel l'agent de sécurité d'enclave (204) en outre :
tente (414) de faire correspondre la chaîne d'événements avec une ou plusieurs chaînes d'événements mauvais connues ; et
en réponse à la recherche d'une correspondance, génère (418) et envoie une alerte à un composant côté serveur (104) du système EDR.

8. Support de stockage lisible par ordinateur non transitoire sur lequel est stocké un code de programme exécutable par un hyperviseur (108) d'un système informatique, le code de programme amenant l'hyperviseur (108) à exécuter un procédé (300) selon l'une quelconque des revendications de procédé précédentes.

9. Système informatique, comprenant :
un processeur ;
un hyperviseur (108) ; et
un support non transitoire lisible par ordinateur sur lequel est stocké un code de programme qui, lorsqu'il est exécuté par le processeur, amène l'hyperviseur (108) à :
créer une enclave logicielle (202) pour une machine virtuelle, VM, (110), l'enclave logicielle (202) étant un environnement d'exécution sécurisé pour exécuter un code de programme qui présente une visibilité dans la VM (110) mais est isolé de processus invités de la VM (110) ;
charger un agent de sécurité d'enclave (204) dans l'enclave logicielle (202), l'agent de sécurité d'enclave (204) étant un composant d'un système de détection et de réponse de point d'extrémité, EDR, qui est configuré pour collecter des informations concernant des événements survenant dans la VM (110) et pour détecter des logiciels malveillants dans la VM (110) sur la base des informations ; et
initier une exécution de l'agent de sécurité d'enclave (204) à l'intérieur de l'enclave logicielle (202).

10. Système informatique selon la revendication 9, dans lequel l'agent de sécurité d'enclave (204) est en outre configuré pour déclencher une ou plusieurs actions pour remédier aux logiciels malveillants détectés dans la VM (110).

11. Système informatique selon la revendication 10, dans lequel les une ou plusieurs actions incluent une suspension d'une ou plusieurs unités centrales de traitement virtuelles, CPU, de la VM (110) ou un achèvement d'un ou plusieurs processus invités de la VM (110).

12. Système informatique selon l'une quelconque des revendications 9 à 11, dans lequel lorsqu'il est initié, l'agent de sécurité d'enclave (204) :
reçoit un ensemble de règles comprenant une pluralité de règles provenant d'un composant côté serveur (104) du système EDR, chaque règle incluant une chaîne d'événements mauvais connue indiquant un type ou une souche de logiciel malveillant ; et
enregistre l'ensemble de règles dans l'enclave logicielle (202).

13. Système informatique selon l'une quelconque des revendications 9 à 12, dans lequel lorsqu'il est initié, l'agent de sécurité d'enclave (204) :
reçoit, à partir d'un agent d'assistance (206) s'exécutant dans la VM (110), une pluralité d'appels de système et, pour chaque appel de système, une adresse physique d'invité, GPA, de la VM (110) où réside le code exécutable pour ledit chaque appel de système ; et
enregistre les GPA pour la pluralité d'appels de système avec l'hyperviseur (108) afin de recevoir des notifications en provenance de l'hyperviseur (108) à chaque accès aux GPA dans la VM (110).

14. Système informatique selon la revendication 13, dans lequel l'agent de sécurité d'enclave (204) en outre :
surveille les notifications pendant que la VM (110) tourne ; et
lors de la réception d'une notification indiquant un accès à une GPA pour un appel de système, génère une chaîne d'événements qui inclut l'appel de système.

15. Système informatique selon la revendication 14, dans lequel l'agent de sécurité d'enclave (204) en outre :
fait correspondre la chaîne d'événements avec une ou plusieurs chaînes d'événements mauvais connues ; et
en réponse à la recherche d'une correspondance, génère et envoie une alerte à un composant côté serveur (104) du système EDR.
